# EUROPEAN PATENT APPLICATION

(11) **EP 2 983 402 A1**
(43) Date of publication of application: **10.02.2016**
(21) Application number: 14778845.9
(22) Date of filing: 03.04.2014
(51) Int. Cl.: H04W 28/06, H04W 16/32, H04W 72/12

(54) **MOBILE COMMUNICATION SYSTEM AND USER TERMINAL**

(30) Priority: 05.04.2013 JP 2013080003
(71) Applicant: Kyocera Corporation, Kyoto-shi, Kyoto 612-8501 (JP)
(72) Inventor: FUKUTA, Noriyoshi, Kyoto-shi Kyoto 612-8501 (JP); MORITA, Kugo, Kyoto-shi Kyoto 612-8501 (JP); YAMAZAKI, Chiharu, Kyoto-shi Kyoto 612-8501 (JP)
(74) Representative: Schwabe - Sandmair - Marx
(86) International application number: PCT/JP2014/059828
(87) International publication number: WO 2014/163137

(57) **Abstract**

In a case where a first connection for downlink through which downlink data is transmitted from an eNB 200-1 to a UE 100 and a second connection for uplink through which uplink data is transmitted from the UE 100 to an eNB 200-2 have been established, the UE 100 transmits down feedback information to the eNB 200-1 and receives up feedback information from the eNB 200-2.

## Description

### TECHNICAL FIELD

The present invention relates to a mobile communication system supporting a dual connection mode.

### BACKGROUND ART

In 3GPP (3rd Generation Partnership Project) as a standardization project of mobile communication systems, the introduction of a dual connection mode is discussed (see Non Patent Literature 1).

As one dual connection mode, a mode in which a first connection for downlink through which downlink data is transmitted from a first radio base station to a user terminal and a second connection for uplink through which uplink data is transmitted from the user terminal to a second radio base station are established is known.

### PRIOR ART DOCUMENT

### Non-PATENT DOCUMENT

[Non Patent Literature 1] 3GPP contribution RP-122033

### SUMMARY OF THE INVENTION

In the dual connection mode, however, the user terminal transmits down feedback information as feedback information for downlink data from the first radio base station to the user terminal to the first radio base station via the second radio base station. Thus, a delay time arises before the first radio base station receives down feedback information, posing a problem that it takes time before the down feedback information is reflected in downlink data communication.

Also in the dual connection mode, the second radio base station transmits up feedback information as feedback information for uplink data from the user terminal to the second radio base station to the user terminal via the first radio base station. Thus, a delay time arises before the user terminal receives up feedback information, posing a problem that it takes time before the up feedback information is reflected in uplink data communication.

Thus, the present invention provides a mobile communication system and a user terminal capable of reducing the time before feedback information is received while making use of a dual connection mode.

According to an embodiment, a mobile communication system comprises a user terminal, a first radio base station, and a second radio base station adjacent to the first radio base station, and supports a dual connection mode in which a first connection for downlink through which downlink data is transmitted from the first radio base station to the user terminal and a second connection for uplink through which uplink data is transmitted from the user terminal to the second ratio base station are established. The user terminal transmits, to the first radio base station, down feedback information as feedback information about the downlink data from the first radio base station to the user terminal. The user terminal receives, from the second radio base station, up feedback information as the feedback information about the uplink data from the user terminal to the second radio base station.

### BRIEF DESCRIPTION OF THE DRAWINGS

[Fig. 1] Fig. 1 is a schematic diagram of an LTE system.
[Fig. 2] Fig. 2 is a block diagram of UE.
[Fig. 3] Fig. 3 is a block diagram of eNB.
[Fig. 4] Fig. 4 is a protocol stack diagram of a wireless interface used in the LTE system.
[Fig. 5] Fig. 5 is a block diagram of a radio frame used in the LTE system.
[Fig. 6] Fig. 6 is a frame block diagram showing the configuration of a down sub-frame.
[Fig. 7] Fig. 7 is a frame block diagram showing the configuration of an up sub-frame.
[Fig. 8] Fig. 8 is a diagram illustrating an operating environment of the LTE system according to the present embodiment.
[Fig. 9] Fig. 9 is a sequence diagram of an operation sequence related to up feedback information.
[Fig. 10] Fig. 10 is a sequence diagram of the operation sequence related to down feedback information.

### DESCRIPTION OF THE EMBODIMENT

### [Overview of Embodiment]

A mobile communication system according to an embodiment is a mobile communication system comprising a user terminal, a first radio base station, and a second radio base station adjacent to the first radio base station, and supporting a dual connection mode in which a first connection for downlink through which downlink data is transmitted from the first radio base station to the user terminal and a second connection for uplink through which uplink data is transmitted from the user terminal to the second ratio base station are established, wherein the user terminal transmits, to the first radio base station, down feedback information as feedback information about the downlink data from the first radio base station to the user terminal, and the user terminal receives, from the second radio base station, up feedback information as the feedback information about the uplink data from the user terminal to the second radio base station.

In the embodiment, when the first radio base station and the second radio base station use a same frequency band, the second radio base station transmits scheduling information containing information indicating a radio resource used for transmission of the up feedback information to the first radio base station, and the first radio base station allocates the radio resource for downlink on the basis of the scheduling information.

In the embodiment, the second radio base station transmits the up feedback information using a data region, instead of a control region, in a downlink frame containing the control region to transmit downlink control information containing the up feedback information and the data region to transmit the downlink data.

In the embodiment, the first radio base station allocates a radio resource such that the radio resource corresponding to the radio resource used for the transmission of the up feedback information are not allocated to a plurality of user terminals including the user terminal that establishes a connection to the first radio base station.

In the embodiment, the first radio base station transmits the downlink data with transmission power of a predetermined value or less using a radio resource corresponding to the radio resource allocated to the user terminal to transmit the up feedback information.

In the embodiment, while the second radio base station transmits the up feedback information, the first radio base station allocates the radio resource such that a null point of a directional beam from the first ratio base station is directed toward the user terminal.

In the embodiment, the second radio base station transmits configuration information indicating a configuration to transmit the up feedback information using the data region to the user terminal.

In the embodiment, the second radio base station transmits the configuration information to the user terminal via the first radio base station.

In the embodiment, the up feedback information is delivery confirmation information of the uplink data transmitted from the user terminal, and the second radio base station transmits the up feedback information via a physical HARQ indicator channel.

In the embodiment, when the first radio base station and the second radio base station use a same frequency band, the first radio base station transmits scheduling information containing information indicating a radio resource used for transmission of the down feedback information to the second radio base station, and the second radio base station allocates the radio resource for uplink on the basis of the scheduling information.

In the embodiment, the first radio base station causes the user terminal to transmit the down feedback information using a data region, instead of a control region, in an uplink frame containing the control region to transmit uplink control information containing the down feedback information and the data region to transmit the uplink data.

In the embodiment, the second radio base station allocates a radio resource such that the radio resource corresponding to the radio resource used for the transmission of the down feedback information are not allocated to a plurality of user terminals including the user terminal that establishes a connection to the second radio base station.

In the embodiment, the user terminal transmits the down feedback information with transmission power of a predetermined value or less.

In the embodiment, the mobile communication system comprises a network containing the first radio base station, the user terminal transmits information indicating whether the user terminal supports the dual connection mode to the first radio base station, and the network determines whether to apply the dual connection mode to the user terminal on the basis of the information.

A user terminal according to an embodiment is a user terminal in a mobile communication system comprising the user terminal, a first radio base station, and a second radio base station adjacent to the first radio base station, and supporting a dual connection mode in which a first connection for downlink through which downlink data is transmitted from the first radio base station to the user terminal and a second connection for uplink through which uplink data is transmitted from the user terminal to the second ratio base station are established, and the user terminal comprises: a transmitter configured to transmit, to the first radio base station, down feedback information as feedback information about the downlink data from the first radio base station to the user terminal; and a receiver configured to receive, from the second radio base station, up feedback information as the feedback information about the uplink data from the user terminal to the second radio base station.

Hereinafter, with reference to the accompanying drawings, description will be provided for each embodiment in a case where a D2D communication is introduced in a cellarer mobile communication system (Hereinafter, a "LTE system") which is configured to comply with the 3GPP standards.

### [First Embodiment]

Hereinafter, a description will be provided for a first embodiment.

### (LTE system)

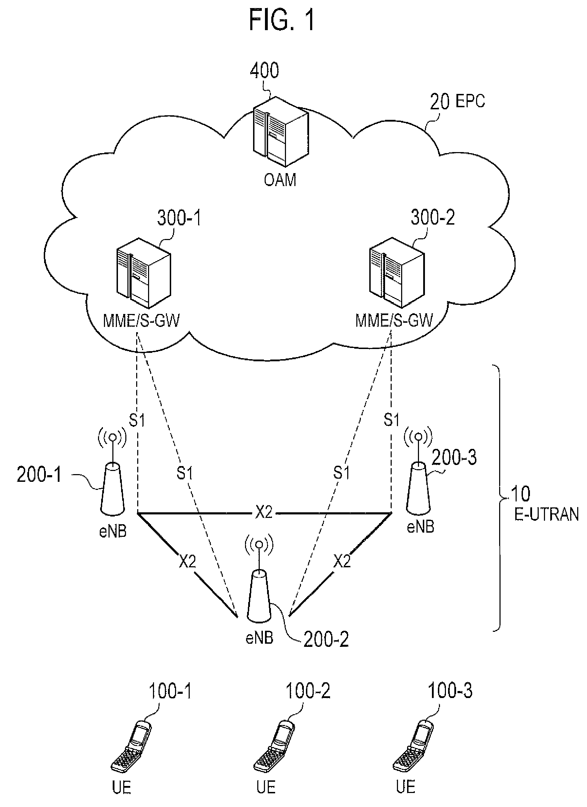

Fig. 1 is a configuration diagram of an LTE system according to the present embodiment.

As illustrated in Fig. 1, the LTE system includes a plurality of UEs (User Equipments) 100, an E-UTRAN (Evolved Universal Terrestrial Radio Access Network) 10, and an EPC (Evolved Packet Core) 20. The E-UTRAN and the EPC 20 constitute a network.

The UE 100 is a mobile radio communication device and performs radio communication with a cell (a serving cell) with which a connection is established. The UE 100 corresponds to the user terminal.

The E-UTRAN 10 includes a plurality of eNBs 200 (evolved Node-Bs). The eNB 200 corresponds to a base station. The eNB 200 controls a cell and performs radio communication with the UE 100 with which a connection with the cell is established.

It is noted that the "cell" is used as a term indicating a minimum unit of a radio communication area, and is also used as a term indicating a function of performing radio communication with the UE 100.

The eNB 200 has, for example, a radio resource management (RRM) function, a routing function of user data, and a measurement control function for mobility control and scheduling.

The EPC 20 includes a MME (Mobility Management Entity)/S-GWs (Serving-Gateways) 300 and an OAM (Operation and Maintenance) 400. In addition, The EPC 20 corresponds to a core network.

The MME is a network node for performing various mobility controls, for example, for the UE 100, and corresponds to a controller. The S-GW is a network node that performs transfer control of user data and corresponds to a mobile switching center.

The eNBs 200 are connected mutually via an X2 interface. Furthermore, the eNB 200 is connected to the MME/S-GW 300 via an S1 interface.

The OAM 400 is a server device managed by an operator and performs maintenance and monitoring of the E-UTRAN 10.

Next, the configurations of the UE 100 and the eNB 200 will be described.

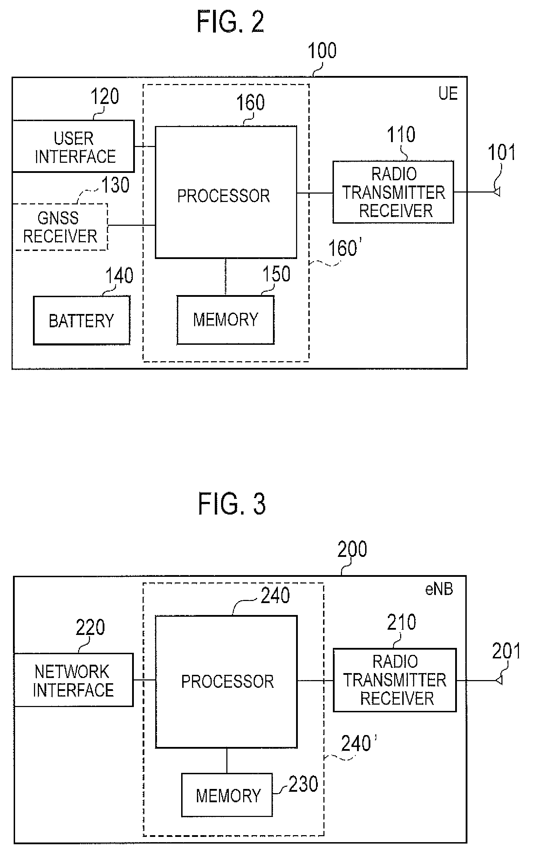

Fig. 2 is a block diagram of the UE 100. As illustrated in Fig. 2, the UE 100 includes an antenna 101, a radio transceiver 110, a user interface 120, a GNSS (Global Navigation Satellite System) receiver 130, a battery 140, a memory 150, and a processor 160. The memory 150 and the processor 160 constitute a controller.

The UE 100 may not have the GNSS receiver 130. Furthermore, the memory 150 may be integrally formed with the processor 160, and this set (that is, a chipset) may be called a processor 160'.

The antenna 101 and the radio transceiver 110 are used to transmit and receive a radio signal. The antenna 101 includes a plurality of antenna elements. The radio transceiver 110 converts a baseband signal output from the processor 160 into the radio signal, and transmits the radio signal from the antenna 101. Furthermore, the radio transceiver 110 converts the radio signal received by the antenna 101 into the baseband signal, and outputs the baseband signal to the processor 160.

The user interface 120 is an interface with a user carrying the UE 100, and for example, includes a display, a microphone, a speaker, various buttons and the like. The user interface 120 receives an operation from a user and outputs a signal indicating the content of the operation to the processor 160.

The GNSS receiver 130 receives a GNSS signal in order to obtain location information indicating a geographical location of the UE 100, and outputs the received signal to the processor 160.

The battery 140 accumulates a power to be supplied to each block of the UE 100.

The memory 150 stores a program to be executed by the processor 160 and information to be used for a process by the processor 160.

The processor 160 includes a baseband processor that performs modulation and demodulation, encoding and decoding and the like of a baseband signal, and a CPU (Central Processing Unit) that performs various processes by executing the program stored in the memory 150. The processor 160 may further include a codec that performs encoding and decoding of sound and video signals. The processor 160 implements various processes and various communication protocols described later.

Fig. 3 is a block diagram of the eNB 200. As illustrated in Fig. 3, the eNB 200 includes an antenna 201, a radio transceiver 210, a network interface 220, a memory 230, and a processor 240. The memory 230 and the processor 240 constitute a controller. Further, the memory 230 may be integrally formed with the processor 240, and this set (that is, a chipset) may be called a processor 240'.

The antenna 201 and the radio transceiver 210 are used to transmit and receive a radio signal. The antenna 102 includes a plurality of antenna elements. The radio transceiver 210 converts the baseband signal output from the processor 240 into the radio signal, and transmits the radio signal from the antenna 201. Furthermore, the radio transceiver 210 converts the radio signal received by the antenna 201 into the baseband signal, and outputs the baseband signal to the processor 240.

The network interface 220 is connected to the neighbor eNB 200 via the X2 interface and is connected to the MME/S-GW 300 via the S1 interface. The network interface 220 is used in communication performed on the X2 interface and communication performed on the S1 interface.

The memory 230 stores a program to be executed by the processor 240 and information to be used for a process by the processor 240.

The processor 240 includes a baseband processor that performs modulation and demodulation, encoding and decoding and the like of a baseband signal, and a CPU that performs various processes by executing the program stored in the memory 230. The processor 240 implements various processes and various communication protocols described later.

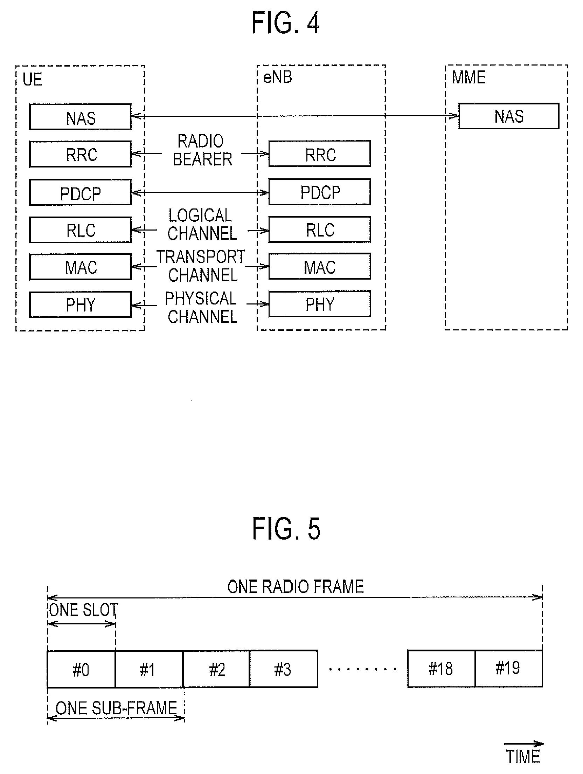

Fig. 4 is a protocol stack diagram of a radio interface in the LTE system.

As illustrated in Fig. 4, the radio interface protocol is classified into a layer 1 to a layer 3 of an OSI reference model, wherein the layer 1 is a physical (PHY) layer. The layer 2 includes a MAC (Media Access Control) layer, an RLC (Radio Link Control) layer, and a PDCP (Packet Data Convergence Protocol) layer. The layer 3 includes an RRC (Radio Resource Control) layer.

The PHY layer performs encoding and decoding, modulation and demodulation, antenna mapping and demapping, resource mapping and demapping. The PHY layer provides an upper layer with transmission service by use of a physical channel. Between the PHY layer of the UE 100 and the PHY layer of the eNB 200, data is transmitted via the physical channel.

The MAC layer performs preferential control of data, and a retransmission process and the like by hybrid ARQ (HARQ). Between the MAC layer of the UE 100 and the MAC layer of the eNB 200, data is transmitted via a transport channel. The MAC layer of the eNB 200 includes a MAC scheduler for determining a transport format (a transport block size, a modulation and coding scheme, and the like) of an uplink and a downlink, and an assignment resource block.

The RLC layer transmits data to an RLC layer of a reception side by using the functions of the MAC layer and the PHY layer. Between the RLC layer of the UE 100 and the RLC layer of the eNB 200, data is transmitted via a logical channel.

The PDCP layer performs header compression and decompression, and encryption and decryption.

The RRC layer is defined only in a control plane. Between the RRC layer of the UE 100 and the RRC layer of the eNB 200, a control signal (an RRC message) for various types of setting is transmitted. The RRC layer controls the logical channel, the transport channel, and the physical channel in response to establishment, reestablishment, and release of a radio bearer. When there is an RRC connection between the RRC of the UE 100 and the RRC of the eNB 200, the UE 100 is in a connected state (an RRC connected state), and when there is no RRC connection, the UE 100 is in an idle state (an RRC idle state).

A NAS (Non-Access Stratum) layer positioned above the RRC layer performs session management, mobility management and the like.

Fig. 5 is a configuration diagram of a radio frame used in the LTE system. In the LTE system, OFDMA (Orthogonal Frequency Division Multiplexing Access) is used for a downlink, and SC-FDMA (Single Carrier Frequency Division Multiple Access) is used for an uplink, respectively.

As illustrated in Fig. 5, the radio frame is configured by 10 subframes arranged in a time direction, wherein each subframe is configured by two slots arranged in the time direction. Each subframe has a length of 1 ms and each slot has a length of 0.5 ms. Each subframe includes a plurality of resource blocks (RBs) in a frequency direction, and a plurality of symbols in the time direction. Each symbol is provided at a head thereof with a guard interval called a cyclic prefix (CP). The resource block includes a plurality of subcarriers in the frequency direction. A radio resource unit configured by one subcarrier and one symbol is called a resource element (RE).

Among radio resources assigned to the UE 100, a frequency resource can be designated by a resource block and a time resource can be designated by a subframe (or a slot).

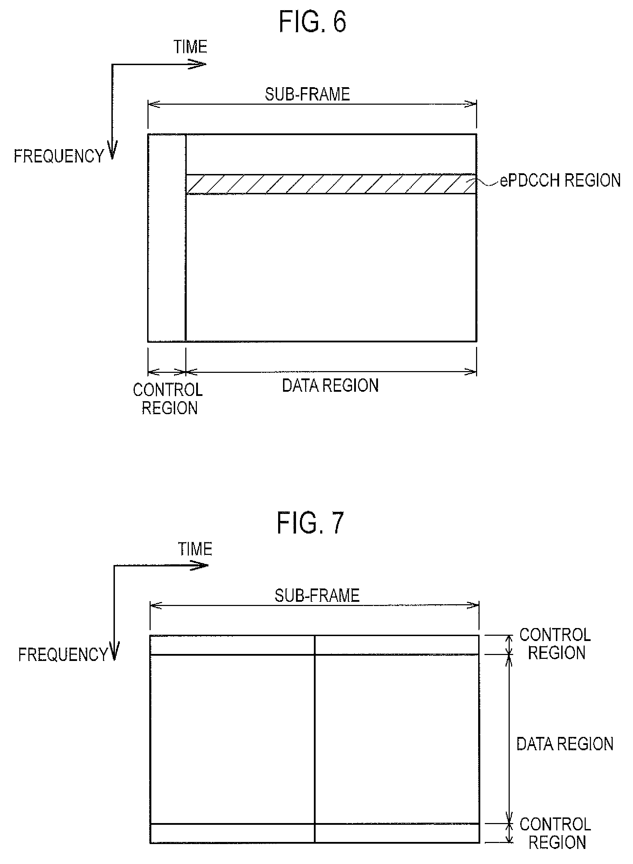

As illustrated in Fig. 6, in the downlink, an interval of several symbols at the head of each subframe is a control region (PDCCH region) made of radio resources (time-frequency resources) mainly used as a physical downlink control channel (PDCCH). Furthermore, the remaining interval of each subframe is a region (PDSCH region) made of radio resources (time-frequency resources) that can be mainly used as a physical downlink shared channel (PDSCH).

PDCCH transfers control signals. Control signals include, for example, uplink SI (Scheduling Information), downlink SI, and a TPC bit. The uplink SI indicates the allocation of an uplink radio resource and the downlink SI indicates the allocation of a downlink radio resource. The TPC bit is a signal instructing an increase or a decrease of uplink transmission power. These control signals are referred to as downlink control information (DCI). In the present embodiment, downlink control information (for example, uplink SI and the TPC bit) related to the uplink is up feedback information. Downlink control information (downlink SI) related to the downlink is downlink feedback information.

PDSCH transfers user data and/or control signals. For example, a data region of downlink may be allocated to user data only or may be allocated such that user data and control signals are multiplexed.

Control signals transmitted via PDSCH include a timing advance value. The timing advance value is a transmission timing correction value of the UE 100 and is determined by the eNB 200 on the basis of an uplink signal transmitted from the UE 100.

Also, downlink reference signals such as a cell specific reference signal (CRS) and/or a channel state information reference signal (CSI-RS) are arranged in each sub-frame in a distributed manner. A downlink reference signal is formed of a predetermined orthogonal signal sequence and arranged in a predetermined resource element.

Also, acknowledge (ACK)/negative acknowledge (NACK) is transferred via a physical HARQ indicator channel (PHICH). ACK/NACK indicates whether a signal transmitted via an uplink physical channel (for example, PUSCH) is successfully decoded. The physical HARQ indicator channel is a channel for notification of a retransmission request signal to PUSCH.

As shown in Fig. 7, both ends in the frequency direction of each sub-frame in an uplink are control regions (PUCCH regions) made of radio resources (time/frequency resources) mainly used as a physical uplink control channel (PUCCH). A center portion in the frequency direction of each sub-frame is a region (PUSCH region) made of radio resources (time/frequency resources) that can mainly be used as a physical uplink shared channel (PUSCH).

PUCCH transfers control signals. Control signals include, for example, channel quality information (CQI: Channel Quality Indicator), normal precoder matrix information (PMI: Precoder Matrix Indicator), special precoder matrix information (BC-PMI: Best Companion Precoder Matrix Indicator), rank information (RI: Rank Indicator), a scheduling request (SR: Scheduling Request), and acknowledge (ACK)/negative acknowledge (NACK). Theses control signals are referred to as uplink control information (UCI). In the present embodiment, the uplink control information is downlink feedback information.

CQI is an index indicating the modulation/coding system (MCS) recommended for the downlink. PMI is an index indicating the precoder matrix (precoder matrix orienting a beam toward the UE 100) recommended for the downlink. BC-PMI is an index indicating the precoder matrix recommended for the downlink for UE (not shown) other than the UE 100 and an index indicating the precoder matrix (precoder matrix orienting null toward the UE 100) preferable for the UE 100. RI is an index indicating the rank (number of layers) recommended for the downlink. SR is a signal requesting the allocation of an uplink radio resource (resource block). ACK/NACK indicates whether a signal transmitted via a downlink physical channel (for example, PDSCH) is successfully decoded.

PUSCH is a physical channel that transfers user data and/or control signals. For example, a data region of uplink may be allocated to user data only or may be allocated such that user data and control signals are multiplexed.

Also, a demodulation reference signal (DMRS) and a sounding reference signal (SRS) are arranged in each sub-frame.

### (ePDCCH and ePHICH)

The eNB 200 normally transmits DCI using the control region via PDCCH. In the present embodiment, however, as shown in Fig. 7, the eNB 200 transmits DCI to the UE 100 to which the dual connection mode described below is applied using the data region, instead of the control region. Such a control channel is referred to as ePDCCH (E-PDCCH: Enhanced-PDCCH).

The eNB 200 normally transmits acknowledge (ACK)/negative acknowledge (NACK) as delivery confirmation information of uplink data using the control region via PHICH. In the present embodiment, however, when acknowledge (ACK)/negative acknowledge (NACK) is transmitted to the UE 100 to which the dual connection mode described below is transmitted, the eNB 200 transmits acknowledge (ACK)/negative acknowledge (NACK) using the data region, instead of the control region. Such a control channel is referred to as ePHICH (E-PHICH; Enhanced-PHICH).

When DCI is transmitted using the data region, the eNB 200 transmits DCI using a specific resource block in the data region. Thus, the specific resource block in the data region is used, like the specific resource block in the control region, for transmission of DCI. Similarly, the specific resource block in the data region is used for transmission of acknowledge (ACK)/negative acknowledge (NACK).

### (Overview of the dual connection mode)

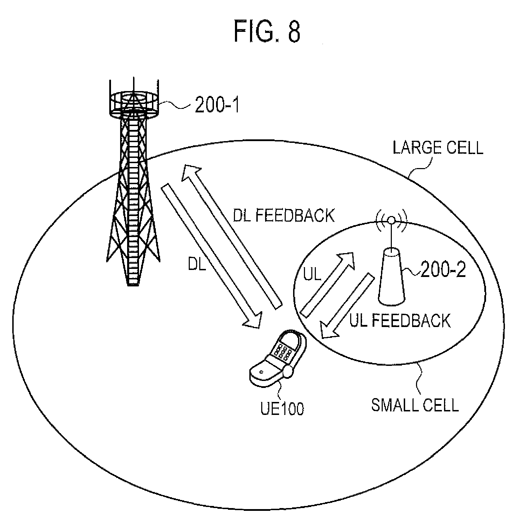

Next, an overview of the dual connection mode supported by an LTE system according to the present embodiment will be provided using Fig. 8. Fig. 8 is a diagram illustrating an operating environment of the LTE system according to the present embodiment.

As shown in Fig. 8, the LTE system according to the present embodiment includes the UE 100, eNB 200-1, and eNB 200-2.

The eNB 200-1 controls a large cell. The large cell is a general cell in the LTE system and is referred to as a macro cell. The eNB 200-1 controls mobility of the UE 100.

The eNB 200-2 controls a small cell. The small cell is a cell whose coverage is narrower than that of a large cell and is referred to as a pico cell or a femto cell. The eNB 200-2 may be a home base station (HeNB). The eNB 200-2 does not control mobility of the UE 100 to which the dual connection mode is applied.

In the present embodiment, a small cell is provided inside a large cell. In the present embodiment, the eNB 200-1 and the eNB 200-2 use the same frequency band. That is, the large cell and the small cell belong to the same frequency band.

The dual connection mode supported by the LTE system according to the present embodiment is a mode in which a first connection for downlink through which downlink data is transmitted from the eNB 200-1 to the UE 100 and a second connection for uplink through which uplink data is transmitted from the UE 100 to the eNB 200-2 are established.

In the present embodiment, the first connection established between the UE 100 and the eNB 200-1 is an RRC connection and the second connection between the UE 100 and the eNB 200-2 is an RRC connection or a connection (for example, an RLC connection) in a layer lower than that of the RRC connection. In the dual connection mode, therefore, the UE 100 being RRC-connected uses radio resources provided by (the eNB 200-1 and eNB 200-2) at least at two different network points connected to the backhaul. The UE 100 may establish a communication bearer with the eNB 200-2 as the second connection without establishing an RRC connection with the eNB 200-2.

As shown in Fig. 8, the UE 100 transmits uplink data to the eNB 200-2. Also, the UE 100 receives downlink data from the eNB 200-1. Accordingly, if power received by the UE 100 from the eNB 200-1 is larger than power received by the UE 100 from the eNB 200-2 and power received by the eNB 200-2 from the UE 100 is larger than power received by the eNB 200-1 from the UE 100, the UE 100 can receive downlink data of good receiving strength and also the eNB 200-2 can receive uplink data of good receiving strength.

Also, as shown in Fig. 8, the UE 100, in principle, transmits uplink data to the eNB 200-2 and exceptionally, transmits down feedback information (DL feedback) classified as uplink data and which is feedback information about downlink data to the eNB 200-1. That is, down feedback information is uplink data, but the UE 100 transmits the down feedback information to the eNB 200-1 without transmitting the information to the eNB 200-2. Therefore, the eNB 200-1 receives the down feedback information directly from the UE 100.

Also, the UE 100, in principle, receives downlink data from the eNB 200-1 and exceptionally, receives up feedback information (UL feedback) classified as downlink data and which is feedback information about uplink data from the eNB 200-2. That is, up feedback information is downlink data, but the UE 100 receives the up feedback information directly from the eNB 200-2 without receiving the information from the eNB 200-1.

### (Operation of a mobile communication system according to the first embodiment)

Next, the operation of a mobile communication system according to the first embodiment will be described. More specifically, (1) Operation sequence related to up feedback information and (2) Operation sequence related to down feedback information. In (1) Operation sequence related to up feedback information, processing to apply the dual connection mode to the UE 100 is also described.

### (1) Operation sequence related to up feedback information

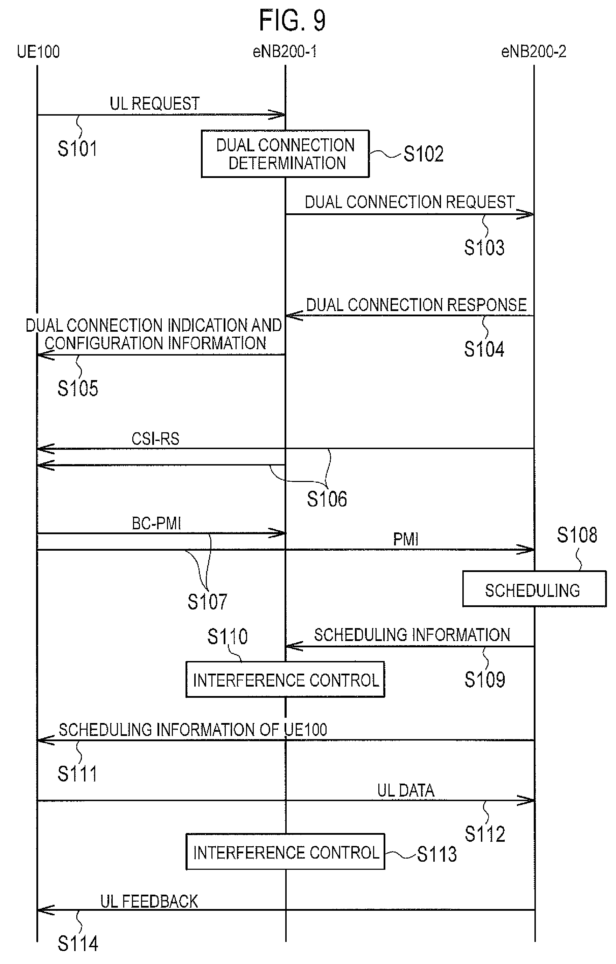

An operation sequence related to up feedback information will be described using Fig. 9. Fig. 9 is a sequence diagram of an operation sequence related to up feedback information.

It is assumed in the description below that the UE 100 establishes a connection to the eNB 200-1 using a large cell as a serving cell and does not establish a connection to the eNB 200-2.

As shown in Fig. 9, in step S101, the UE 100 transmits an uplink request (UL request) to the eNB 200-1. The eNB 200-1 receives the uplink request.

The uplink request is information requesting transmission of uplink data by the UE 100.

In the present embodiment, the UE 100 transmits capability information indicating whether the UE 100 supports the dual connection mode to the eNB 200-1. The eNB 200-1 receives the capability information. In the present embodiment, the following description assumes that the capability information is information indicating the UE 100 supports the dual connection mode.

Also in the present embodiment, the UE 100 transmits a measurement report to the eNB 200-1. The eNB 200-1 receives the measurement report. The measurement report contains respective measurement information (such as received power of a reference signal) of a large cell controlled by the eNB 200-1 and a small cell (neighboring cell) controlled by the eNB 200-2.

The UE 100 may also transmit location information of the UE 100.

In step S102, the eNB 200-1 determines whether to apply the dual connection mode to the UE 100.

More specifically, the eNB 200-1 first determines whether to apply the dual connection mode to the UE 100 on the basis of capability information.

If the capability information indicates that the UE 100 supports the dual connection mode, the eNB 200-1 determines whether the UE 100 can be connected to another eNB 200 than the eNB 200-1.

On the other hand, if the capability information indicates that the UE 100 does not support the dual connection mode, the eNB 200-1 determines not to apply the dual connection mode to the UE 100.

The eNB 200-1 determines whether the UE 100 can be connected to another eNB 200 on the basis of the measurement report. If measurement information about the small cell controlled by the eNB 200-2 is good, the eNB 200-1 determines that the UE 100 can be connected to another eNB 200. In this case, the eNB 200-1 determines to apply the dual connection mode to the UE 100.

On the other hand, if measurement information about the small cell controlled by the eNB 200-2 is not good, the eNB 200-1 determines that the UE 100 cannot be connected to another eNB 200. In this case, the eNB 200-1 determines not to apply the dual connection mode to the UE 100.

The eNB 200-1 may determine whether the UE 100 can be connected to another eNB 200 on the basis of the location information of the UE 100. If, for example, the distance between the UE 100 and the eNB 200-1 is larger than a value obtained by adding a predetermined value to the distance between the UE 100 and the eNB 200-2, the eNB 200-1 determines to apply the dual connection mode to the UE 100.

In the present embodiment, it is assumed in the description below that the eNB 200-1 determines to apply the dual connection mode to the UE 100.

In step S103, the eNB 200-1 transmits a dual connection request to the eNB 200-2. The eNB 200-2 receives the dual connection request.

The dual connection request is information requesting to establish a connection to the UE 100 to which the dual connection mode is applied.

In the present embodiment, the dual connection request contains information indicating that in principle, the UE 100 transmits uplink data to the eNB 200-2 and receives downlink data from the eNB 200-1.

When the dual connection request is received, the eNB 200-2 determines whether to establish a connection to the UE 100. The eNB 200-2 determines whether to establish a connection to the UE 100 on the basis of, for example, load conditions of the eNB 200-2. More specifically, if the traffic amount of the eNB 200-2 does not exceed a predetermined value, the eNB 200-2 may determine to establish a connection to the UE 100.

In the present embodiment, it is assumed in the description below that the eNB 200-2 determines to establish a connection to the UE 100.

In step S104, the eNB 200-2 transmits a dual connection response to the eNB 200-1. The eNB 200-1 receives the response to the dual connection request.

The dual connection response is a response to the dual connection request. As a response to the dual connection request, the eNB 200-2 transmits dual connection request Ack or dual connection request Nack to the dual connection request.

Along with the dual connection response, the eNB 200-2 may transmit configuration information indicating the configuration of information transmitted from the eNB 200-2 to the UE 100 to the eNB 200-1 on an X2 interface. In this case, the configuration information of the eNB 200-2 is transmitted to the UE 100 via the eNB 200-1.

As the configuration information, the eNB 200-2 transmits, for example, CSI-RS Configuration Information, ePDCCH Configuration Information, and ePHICH Configuration Information to the eNB 200-1 on the X2 interface.

The CSI-RS Configuration Information is information indicating the configuration of CSI-RS transmitted by the eNB 200 (eNB 200-2). The ePDCCH Configuration Information is information indicating the configuration of ePDCCH transmitted by the eNB 200 (eNB 200-2). The ePHICH Configuration Information is information indicating the configuration of ePHICH transmitted by the eNB 200 (eNB 200-2).

The eNB 200-2 may transmit configuration information separately from a dual connection request.

In step S105, the eNB 200-1 transmits a dual connection instruction to the UE 100. The UE 100 receives the dual connection instruction.

The dual connection instruction is information instructing the UE 100 to adopt a dual connection. In the present embodiment, the dual connection request contains information indicating that in principle, the UE 100 transmits uplink data to the eNB 200-2 and receives downlink data from the eNB 200-1.

The UE 100 establishes a connection to the eNB 200-2 on the basis of the dual connection instruction. Accordingly, the dual connection mode is applied to the UE 100.

Also in the present embodiment, the eNB 200-1 transmits the configuration information to the UE 100. The configuration information in step S105 contains the configuration information received from the eNB 200-2 in step S104. Also, the configuration information in step S105 may contain the configuration information of information transmitted from the eNB 200-1 to the UE 100.

The UE 100 receives the configuration information from the eNB 200-1. The UE 100 receives the configuration information of the eNB 200-2 via the eNB 200-1.

In the present embodiment, the eNB 200-1 transmits, in addition to CSI-RS Configuration Information, ePDCCH Configuration Information, and ePHICH Configuration Information received from the eNB 200-2, the configuration information of CSI-RS transmitted from the eNB 200-1 to the UE 100 is transmitted to the UE 100.

The UE 100 receives the configuration information from the eNB 200-1. The UE 100 performs reception processing on the basis of various kinds of configuration information (CSI-RS Configuration Information of the eNB 200-2, ePDCCH Configuration Information of the eNB 200-2, ePHICH Configuration Information of the eNB 200-2, and CSI-RS Configuration Information of the eNB 200-1) contained in the configuration information.

In step S106, each of the eNB 200-1 and eNB 200-2 transmits a channel state information reference signal (CSI-RS). The UE 100 receives CSI-RS from each of the eNB 200-1 and eNB 200-2.

The UE 100 forms estimation (channel estimation) of channel characteristics between the UE 100 and the eNB 200-1 on the basis of CSI-RS received from the eNB 200-1. Based on a result of the channel estimation, the UE 100 generates channel state information (CSI) between the eNB 200-1 and the UE 100. Similarly, the UE 100 generates channel state information between the eNB 200-2 and the UE 100 on the basis of CSI-RS received from the eNB 200-2. The channel state information contains at least one of CQI, PMI, BC-PMI, and RI.

In the present embodiment, the UE 100 generates BC-PMI on the basis of CSI-RS received from the eNB 200-1 and generates PMI on the basis of CSI-RS received from the eNB 200-2.

In step S107, the UE 100 transmits the channel state information (CSI) to the eNB 200-1 and eNB 200-2. Each of the eNB 200-1 and eNB 200-2 receives the channel state information.

In the present embodiment, the UE 100 transmits BC-PMI as the channel state information to the eNB200-1. Also, the UE 100 transmits PMI as the channel state information to the eNB200-2.

Incidentally, the channel state information transmitted in step S107 is down feedback information.

In step S108, the eNB 200-2 performs scheduling. More specifically, the eNB 200-2 allocates a radio resource to the UE 100 to transmit up feedback information transmitted from the eNB 200-2 to the UE 100 on the basis of PMI received from the UE 100. The eNB 200-2 allocates a radio resource in the data region or a radio resource in the control region to the UE 100.

The eNB 200-2 also allocates an uplink radio resource to the UE 100 to transmit uplink data transmitted from the UE 100 to the eNB 200-2.

In step S109, the eNB 200-2 transmits scheduling information to the eNB 200-1. The eNB 200-1 receives the scheduling information.

The scheduling information contains information indicating a downlink radio resource used for transmission of up feedback information. In addition to the information indicating a downlink radio resource, the scheduling information may contain information indicating an uplink radio resource allocated to the UE 100. Further, the scheduling information may contain information indicating a radio resource allocated to other UE establishing connection to the eNB 200-2.

In step S110, the eNB 200-1 performs interference control on the basis of the scheduling information.

In the present embodiment, when the eNB 200-2 transmits downlink scheduling information of the UE 100 to the UE 100 in step S111, the eNB 200-1 can perform at least one of Operation patterns 1 to 3 shown below to inhibit interference of the eNB 200-1 with the UE 100.

### (1.1) Operation pattern 1

The eNB 200-1 allocates a radio resource such that a radio resource corresponding to the radio resource used for transmission of up feedback information (that is, scheduling information of downlink of the UE 100 transmitted in step S111) are not allocated to the UE 100 and other UE.

The Radio resource corresponding to the radio resource used for transmission of up feedback information is a radio resource whose frequency band and time overlap with a radio resource used for transmission of up feedback information.

More specifically, when the eNB 200-2 allocates a radio resource in the data region to the UE 100 to transmit up feedback information in step S108, the eNB 200-1 avoids allocation of the same radio resource in the data region to the UE 100 and other UE. The allocation of the same radio resource in the data region may be avoided by static resource partitioning.

Similarly, when the eNB 200-2 allocates a radio resource in the control region to the UE 100, the eNB 200-1 performs control to reduce the allocation amount of the control channel (Lightly loaded PDCCH).

### (1.2) Operation pattern 2

The eNB 200-1 transmits downlink data transmitted to the UE 100 or other UE with transmission power of a predetermined value or less using a radio resource corresponding to a radio resource allocated to the UE 100 to transmit up feedback information.

More specifically, when the eNB 200-2 allocates a radio resource in the data region to the UE 100 to transmit up feedback information in step S108, the eNB 200-1 transmits downlink data transmitted using the same radio resource in the data region to the UE 100 and other UE with transmission power of a predetermined value or less. That is, the eNB 200-1 transmits downlink data with less transmission power than normal one. The transmission power may also be zero.

Similarly, when the eNB 200-2 allocates a radio resource in the control region to the UE 100 in step S108, the eNB 200-1 transmits downlink data transmitted in the control region to the UE 100 and other UE with transmission power of a predetermined value or less.

### (1.3) Operation pattern 3

While the eNB 200-2 transmits up feedback information, the eNB 200-1 allocates a radio resource such that the null point of a directional beam from the eNB 200-1 is directed toward the UE 100.

When the eNB 200-2 uses a radio resource in the data region to transmit up feedback information, the eNB 200-1 allocates a radio resource of downlink data such that the null point of a directional beam is directed toward the UE 100 on the basis of BC-PMI received from the UE 100 in step S107.

The eNB 200-1 can perform Operation patterns 1 to 3 described above.

Next, in step S111, the eNB 200-2 transmits scheduling information of the UE 100. The UE 100 receives the scheduling information of the UE 100.

The scheduling information of the UE 100 is the scheduling information of uplink and the scheduling information of downlink of the UE 100 scheduled in step S108 described above.

The UE 100 can receive the scheduling information from the eNB 200-2 without being subjected to interference from the eNB 200-1 by the interference control in step S110 described above being performed by the eNB 200-1.

In step S112, the UE 100 transmits uplink data (UL data) on the basis of the scheduling information received in step S111. The eNB 200-2 receives the uplink data.

The UE 100 does not transmit uplink data to the eNB 200-1 excluding down feedback information.

In step S113, the eNB 200-1 performs interference control on the basis of the scheduling information.

In step S114, when the eNB 200-2 transmits uplink feedback information of the UE 100 to the UE 100, the eNB 200-1 performs interference control like in step S110 to inhibit the eNB 200-1 from interfering with the UE 100.

In step S114, the eNB 200-2 transmits up feedback information of the uplink data in step S112 to the UE 100.

The up feedback information is, for example, DCI (for example, uplink SI or a TPC bit) about the uplink or ACK/NACK transmitted via PHICH.

The eNB 200-2 may transmit DCI using the data region. The eNB 200-2 may also transmit ACK/NACK using the data region via ePHICH.

The UE 100 can receive the up feedback information from the eNB 200-2 without being subjected to interference from the eNB 200-1 by the interference control in step S113 described above being performed by the eNB 200-1.

The UE 100 transmits uplink data on the basis of up feedback information. For example, the UE 100 transmits new uplink data or retransmits transmitted uplink data after reflecting up feedback information.

### (2) Operation sequence related to down feedback information

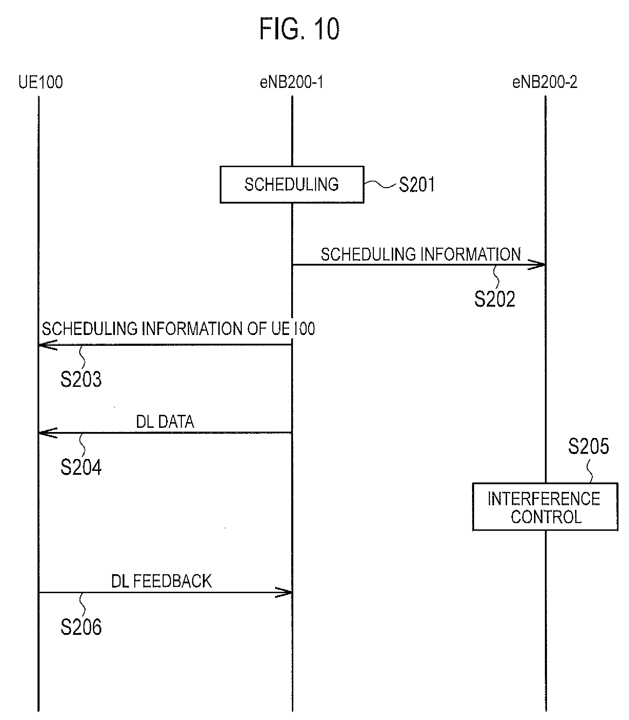

Next, an operation sequence related to down feedback information will be described using Fig. 10. Fig. 10 is a sequence diagram of an operation sequence related to down feedback information.

In step 201, as shown in Fig. 10, the eNB 200-1 performs scheduling. More specifically, the eNB 200-1 allocates an uplink radio resource to the UE 100 to transmit down feedback information transmitted from the UE 100. The eNB 200-1 allocates a radio resource in the data region or a radio resource in the control region to the UE 100.

The eNB 200-1 may allocate radio resources to the UE 100 such that the UE 100 is caused to transmit down feedback information using the data region.

The eNB 200-1 also allocates a downlink radio resource to the UE 100 to transmit downlink data transmitted from the eNB 200-1 to the UE 100.

In step S202, the eNB 200-1 transmits scheduling information to the eNB 200-2. The eNB 200-2 receives the scheduling information.

The scheduling information contains information indicating an uplink radio resource allocated to down feedback information. The scheduling information may contain, in addition to the information indicating the uplink radio resource, information indicating a downlink radio resource allocated to the UE 100. The scheduling information may also contain information indicating a radio resource allocated to other UE establishing connection to the eNB 200-1.

In step S203, the eNB 200-1 transmits scheduling information of the UE 100 to the UE 100. The UE 100 receives the scheduling information of the UE 100.

The scheduling information of the UE 100 is the scheduling information of uplink and of downlink of the UE 100 scheduled in step S202 described above.

In step S204, the eNB 200-1 transmits downlink data (DL data) on the basis of the scheduling information transmitted in step S203. The UE 100 receives the downlink data.

In step S205, the eNB 200-2 performs interference control on the basis of the scheduling information.

In the present embodiment, when the UE 100 transmits down feedback information to the eNB 200-1 in step S206, the eNB 200-2 performs the following operation pattern to inhibit the UE 100 from interfering with eNB 200-2.

The eNB 200-2 allocates a radio resource such that a radio resource corresponding to the radio resource used for transmission of down feedback information (that is, feedback information transmitted in step S206) are not allocated to the UE 100 and other UE.

More specifically, when the eNB 200-1 allocates a radio resource in the data region to the UE 100 to transmit down feedback information in step S201, the eNB 200-2 avoids allocation of the same radio resource in the data region to the UE 100 and other UE. The allocation of the same radio resource in the data region may be avoided by static resource partitioning.

In step S206, the UE 100 transmits down feedback information of the downlink data in step S204 to the eNB 200-1. The eNB 200-1 receives the down feedback information.

The UE 100 transmits the down feedback information to the eNB 200-1 on the basis of scheduling information. If the scheduling information contains information indicating transmission of down feedback information using the data region, the UE 100 transmits the down feedback information to the eNB 200-1 using the data region.

The down feedback information is, for example, UCI (for example, CQI, PMI, BC-PMI, RI, or ACK/NaCK) related to downlink.

The eNB 200-2 can receive uplink data from the UE 100 or other UE without being subjected to interference from the UE 100 by the interference control in step S205 described above being performed by the eNB 200-2.

Instead of the interference control in step S205, the UE 100 may transmit down feedback information with transmission power of a predetermined value or less. That is, the UE 100 transmits down feedback information with less transmission power than normal one.

The eNB 200-1 performs processing to improve data communication of downlink on the basis of the down feedback information. For example, the eNB 200-1 transmits new downlink data or retransmits transmitted downlink data after reflecting down feedback information. The eNB 200-1 may perform the interference control such that the UE 100 is not subjected to interference.

### (Summary of the first embodiment)

In the present embodiment, in a case where a first connection for downlink through which downlink data is transmitted from the eNB 200-1 to the UE 100 and a second connection for uplink through which uplink data is transmitted from the UE 100 to the eNB 200-2 have been established, the UE 100 transmits down feedback information to the eNB 200-1 and receives up feedback information from the eNB 200-2. Accordingly, the down feedback information is directly transmitted from the UE 100 to the eNB 200-1 that transmits downlink data and thus, the time before the down feedback information is received can be reduced. Also, the up feedback information is directly transmitted from the eNB 200-2 to the UE 100 that transmits uplink data and thus, the time before the up feedback information is received can be reduced.

Also in the present embodiment, when the eNB 200-1 and the eNB 200-2 use the same frequency band, the eNB 200-2 transmits scheduling information containing information indicating a radio resource used for transmission of up feedback information to the eNB 200-1 and the eNB 200-1 allocates a radio resource for downlink on the basis of the scheduling information. Accordingly, the eNB 200-1 can allocate radio resources for downlink in consideration of the radio resource used for transmission of up feedback information of the eNB 200-2. Therefore, the eNB 200-1 whose transmission power is larger than that of the eNB 200-2 can allocate the radio resource for downlink such that no interference occurs when the UE 100 receives up feedback information.

Also in the present embodiment, the eNB 200-2 transmits up feedback information using a data region, instead of a control region, in a downlink frame containing the control region and the data region. A radio resource can be allocated to the data region more freely than the control region and thus, the eNB 200-1 can allocate a radio resource for downlink such that no interference occurs when the UE 100 receives up feedback information.

Also in the present embodiment, the eNB 200-1 allocates a radio resource of downlink such that a radio resource corresponding to the radio resource used for transmission of up feedback information are not allocated to the UE 100 and other UE. Accordingly, downlink transmission from the eNB 200-1 using the same radio resource as a radio resource used for transmission of up feedback information does not occur and therefore, the UE 100 can receive up feedback information satisfactorily.

Also in the embodiment, the eNB 200-1 transmits downlink data with transmission power of a predetermined value or less using a radio resource corresponding a radio resource allocated to the UE 100 to transmit up feedback information. Accordingly, the occurrence of interference caused by the eNB 200-2 when the UE 100 receives up feedback information can be inhibited.

Also in the embodiment, the eNB 200-1 allocates a radio resource for downlink such that the null point of a directional beam from the eNB 200-1 is directed toward the UE 100 while the eNB 200-2 transmits up feedback information. Accordingly, the occurrence of interference caused by the eNB 200-2 when the UE 100 receives up feedback information can be inhibited.

Also in the embodiment, the eNB 200-2 transmits ePDCCH Configuration Information indicating the configuration to transmit up feedback information using the data region to the UE 100. Accordingly, even if the eNB 200-2 transmits up feedback information using the data region, the UE 100 can receive the up feedback information.

Also in the embodiment, the eNB 200-2 transmits ePDCCH Configuration Information to the UE 100 via the eNB 200-1. Accordingly, even before the UE 100 and the eNB 200-2 establish a connection, the UE 100 can reduce the time before ePDCCH Configuration Information is received and therefore, the time before feedback information is received can be reduced.

Also in the embodiment, up feedback information is delivery confirmation information of uplink data transmitted from the UE 100 and the eNB 200-2 transmits up feedback information using the data region via the physical HARQ indicator channel. Accordingly, radio resources can be allocated to the data region more freely than the control region and therefore, the eNB 200-1 can allocate a radio resource for downlink such that no interference occurs when the UE 100 does up feedback information.

Also in the present embodiment, when the eNB 200-1 and the eNB 200-2 use the same frequency band, the eNB 200-1 transmits scheduling information containing information indicating a radio resource used for transmission of down feedback information to the eNB 200-2 and the eNB 200-2 allocates a radio resource for uplink on the basis of the scheduling information. Accordingly, the eNB 200-2 can allocate the radio resource for uplink to the UE 100 and other UE establishing a connection to the eNB 200-2 in consideration of the radio resource used for transmission of down feedback information of the UE 100. Therefore, the radio resource for uplink can be allocated such that no interference with the eNB 200-2 occurs when the UE 100 transmits down feedback information.

Also in the embodiment, the eNB 200-1 causes the UE 100 to transmit down feedback information using the data region, instead of the control region, in an uplink frame containing the control frame and the data region. A radio resource can be allocated to the data region more freely than the control region and thus, the eNB 200-2 can allocate a radio resource for uplink such that no interference with the eNB 200-2 occurs when the UE 100 transmits down feedback information.

Also in the embodiment, the eNB 200-2 allocates radio resources of uplink such that a radio resource corresponding to the radio resource used for transmission of down feedback information are not allocated to the UE 100 and other UE establishing a connection to the eNB 200-2. Accordingly, transmission of uplink from other UE using the same radio resource as a radio resource used for transmission of down feedback information is not made and therefore, interference with the eNB 200-2 can be inhibited.

Also in the embodiment, the UE 100 transmits down feedback information with transmission power of a predetermined value or less. Accordingly, the occurrence of interference with the eNB 200-2 when the UE 100 transmits down feedback information can be inhibited.

Also in the embodiment, the UE 100 transmits capability information indicating whether the UE 100 supports the dual connection mode to the eNB 200-1 and the eNB 200-1 determines whether to apply the dual connection mode to the UE 100 on the basis of the capability information. Accordingly, there is no need to determine whether to apply the dual connection mode for the UE 100 that does not support the dual connection mode.

### [Other embodiments]

The present invention has been described based on an embodiment thereof as described above, but a portion of the description or drawings forming the disclosure should not be understood as limiting the invention. Various alternative embodiments, examples, and operation techniques are apparent to those skilled in the art from the disclosure.

In the above embodiment, the eNB 200-1 determines whether to apply the dual connection mode to the UE 100, but an embodiment is not limited to such an example. For example, a network (for example, MME) may determine whether to apply the dual connection mode to the UE 100.

Also, the eNB 200-1 and the eNB 200-2 allocate s radio resource, but the network may control the allocation of s radio resource.

Also in the above embodiment, the eNB 200-1 and the eNB 200-2 use the same frequency band, but an embodiment is not limited to such an example. The eNB 200-1 and the eNB 200-2 may use mutually different frequency bands.

Also in the above embodiment, a small cell is provided inside the coverage of a large cell, but an embodiment is not limited to such an example. A cell controlled by the eNB 200-1 and a cell controlled by the eNB 200-2 may be adjacent to each other.

Also in the above embodiment, in step S104 and step S105, the eNB 200-2 transmits configuration information of the eNB 200-2 to be transmitted to the UE 100 to the UE 100 via the eNB 200-1, but an embodiment is not limited to such an example. The eNB 200-2 may directly transmit configuration information of the eNB 200-2 to the UE 100-1 by broadcasting or unicasting without going through the eNB 200-1.

Also in the above embodiment, when the eNB 200-1 and the eNB 200-2 share up scheduling information of the UE 100 and down scheduling information of the UE 100, the UE 100, the eNB 200-1, and the eNB 200-2 may be controlled such that transmission of downlink data from the eNB 200-1 to the UE 100 and uplink data from the UE 100 to the eNB 200-2 and transmission of up feedback information from the eNB 200-2 to the UE 100 and down feedback information from the UE 100 to the eNB 200-1 are alternated. That is, the eNB 200-1 transmits downlink data and also the UE 100 transmits uplink data. In subsequent timing, the eNB 200-2 transmits up feedback information of the uplink data to the UE 100 and also the UE 100 transmits down feedback information of the downlink data to the eNB 200-2. In subsequent timing, the eNB 200-1 transmits downlink data on the basis of the down feedback information and also the UE 100 transmits uplink data on the basis of the up feedback information. The above set of processing may be repeated. Accordingly, up feedback information, down feedback information, downlink data, and uplink data are efficiently transmitted and received.

Also in the above embodiment, when the eNB 200-2 receives down scheduling information of the UE 100 from the eNB 200-1, the eNB 200-1 and the eNB 200-2 may cooperatively communicate with the UE 100 (so-called CoMP communication). That is, the eNB 200-1 and the eNB 200-2 may each use the same radio resource to transmit data to the UE 100 simultaneously. Alternatively, the eNB 200-1 and the eNB 200-2 may each secure the same radio resource to selectively transmit data to the UE 100.

In the aforementioned embodiments, an example of the present invention applied to a LTE system; however, it is not limited to the LTE system, and the present invention may be applied to a system other than the LTE system.

In addition, the entire content of JP Patent Application No. 2013-080003 (filed on April 5, 2013) is incorporated in the present specification by reference.

### INDUSTRIAL APPLICABILITY

As described above, the mobile communication system and the user terminal according to the present invention can reduce the time before feedback information is received while making use of a dual connection mode and thus it is useful in a mobile communication field.

## Claims

1. A mobile communication system comprising a user terminal, a first radio base station, and a second radio base station adjacent to the first radio base station, and supporting a dual connection mode in which a first connection for downlink through which downlink data is transmitted from the first radio base station to the user terminal and a second connection for uplink through which uplink data is transmitted from the user terminal to the second ratio base station are established, wherein
the user terminal transmits, to the first radio base station, down feedback information as feedback information about the downlink data from the first radio base station to the user terminal, and
the user terminal receives, from the second radio base station, up feedback information as the feedback information about the uplink data from the user terminal to the second radio base station.

2. The mobile communication system according to claim 1, wherein
when the first radio base station and the second radio base station use a same frequency band, the second radio base station transmits scheduling information containing information indicating a radio resource used for transmission of the up feedback information to the first radio base station, and
the first radio base station allocates the radio resource for downlink on the basis of the scheduling information.

3. The mobile communication system according to claim 2, wherein
the second radio base station transmits the up feedback information using a data region, instead of a control region, in a downlink frame containing the control region to transmit downlink control information containing the up feedback information and the data region to transmit the downlink data.

4. The mobile communication system according to claim 2 or 3, wherein
the first radio base station allocates a radio resource such that the radio resource corresponding to the radio resource used for the transmission of the up feedback information are not allocated to a plurality of user terminals including the user terminal that establishes a connection to the first radio base station.

5. The mobile communication system according to claim 2 or 3, wherein
the first radio base station transmits the downlink data with transmission power of a predetermined value or less using a radio resource corresponding to the radio resource allocated to the user terminal to transmit the up feedback information.

6. The mobile communication system according to claim 3, wherein
while the second radio base station transmits the up feedback information, the first radio base station allocates the radio resource such that a null point of a directional beam from the first ratio base station is directed toward the user terminal.

7. The mobile communication system according to claim 3, wherein
the second radio base station transmits configuration information indicating a configuration to transmit the up feedback information using the data region to the user terminal.

8. The mobile communication system according to claim 7, wherein
the second radio base station transmits the configuration information to the user terminal via the first radio base station.

9. The mobile communication system according to claim 3, wherein
the up feedback information is delivery confirmation information of the uplink data transmitted from the user terminal, and
the second radio base station transmits the up feedback information via a physical HARQ indicator channel.

10. The mobile communication system according to claim 1, wherein
when the first radio base station and the second radio base station use a same frequency band, the first radio base station transmits scheduling information containing information indicating a radio resource used for transmission of the down feedback information to the second radio base station, and
the second radio base station allocates the radio resource for uplink on the basis of the scheduling information.

11. The mobile communication system according to claim 10, wherein
the first radio base station causes the user terminal to transmit the down feedback information using a data region, instead of a control region, in an uplink frame containing the control region to transmit uplink control information containing the down feedback information and the data region to transmit the uplink data.

12. The mobile communication system according to claim 10 or 11, wherein
the second radio base station allocates a radio resource such that the radio resource corresponding to the radio resource used for the transmission of the down feedback information are not allocated to a plurality of user terminals including the user terminal that establishes a connection to the second radio base station.

13. The mobile communication system according to claim 10 or 11, wherein
the user terminal transmits the down feedback information with transmission power of a predetermined value or less.

14. The mobile communication system according to claim 1, wherein
the mobile communication system comprises a network containing the first radio base station,
the user terminal transmits information indicating whether the user terminal supports the dual connection mode to the first radio base station, and
the network determines whether to apply the dual connection mode to the user terminal on the basis of the information.

15. A user terminal in a mobile communication system comprising the user terminal, a first radio base station, and a second radio base station adjacent to the first radio base station, and supporting a dual connection mode in which a first connection for downlink through which downlink data is transmitted from the first radio base station to the user terminal and a second connection for uplink through which uplink data is transmitted from the user terminal to the second ratio base station are established, the user terminal comprising:
a transmitter configured to transmit, to the first radio base station, down feedback information as feedback information about the downlink data from the first radio base station to the user terminal; and
a receiver configured to receive, from the second radio base station, up feedback information as the feedback information about the uplink data from the user terminal to the second radio base station.
